# EUROPÄISCHE PATENTSCHRIFT

(11) **EP 2 558 751 B1**
(45) Veröffentlichungstag und Bekanntmachung des Hinweises auf die Patenterteilung: **07.10.2015**
(21) Anmeldenummer: 11710758.1
(22) Anmeldetag: 23.03.2011
(51) Int. Cl.: F16K 1/44, F16K 11/04, F02M 25/07

(54) **ANORDNUNG EINES VENTILS IN EINER BOHRUNG EINES KANALGEHÄUSES**
ARRANGEMENT OF A VALVE IN A BORE OF A DUCT HOUSING
DISPOSITION D'UNE SOUPAPE DANS UN ALÉSAGE D'UN LOGEMENT DE CONDUIT

(30) Priorität: 13.04.2010 DE 102010014841
(43) Veröffentlichungstag der Anmeldung: 20.02.2013
(73) Patentinhaber: Pierburg GmbH, 41460 Neuss (DE)
(72) Erfinder: QUIRLL, Michael, 50937 Köln (DE); BORNEMANN, Dirk, 40223 Düsseldorf (DE)
(74) Vertreter: Patentanwälte ter Smitten Eberlein Rütten Partnerschaftsgesellschaft
(86) Internationale Anmeldenummer: PCT/EP2011/054425
(87) Internationale Veröffentlichungsnummer: WO 2011/128191

(56) Entgegenhaltungen:
- EP-A1- 2 243 947
- EP-A2- 1 072 784
- WO-A1-01/00982
- DE-B- 1 038 857
- GB-A- 657 112
- US-A- 2 880 748
- US-A- 3 454 035
- US-B2- 6 814 102

## Beschreibung

Die Erfindung betrifft eine Anordnung eines Ventils in einer Bohrung eines Kanalgehäuses mit einem einstückigen Ventilgehäuse, in dem ein Eintritt und zumindest ein Austritt ausgebildet sind und welches in die Bohrung des Kanalgehäuses eingesteckt ist, wobei im Ventilgehäuse eine translatorisch bewegbare Ventilstange angeordnet ist, auf welcher zumindest ein mit einem Ventilsitz korrespondierender Ventilschließkörper angeordnet ist.

Derartige Ventile werden beispielsweise in Verbrennungskraftmaschinen als Abgasrückführventile in Abgasrückführkanälen eingesetzt. Diese Ausführung als steckbares Ventil mit einem Gehäuse, welches bereits Teile eines oder mehrerer Kanäle bildet, hat den Vorteil, dass ein derartiges Ventil komplett vormontiert und verschickt und erst anschließend im Kanalgehäuse eingebaut werden kann. Ein solches Ventil wird in das Kanalgehäuse von einer offenen Seite einer Bohrung im Kanalgehäuse eingesteckt und am Kanalgehäuse beispielsweise mittels Schrauben befestigt. Es ist jedoch darauf zu achten, dass kein Abgas nach außen dringen kann, also keine Leckagen vorhanden sind, die zu einer Belastung der Umwelt führen.

Entsprechend wird in der DE 103 332 915 A1 ein Abgasrückführventil offenbart, welches als Steckventil ausgeführt ist, wobei das Steckventil einen Abgaseingang und zwei Abgasausgänge aufweist. Die Verbindung zwischen dem Eingang und dem Ausgang kann über zwei auf einer gemeinsamen Betätigungsstange angeordnete Ventilglieder geregelt werden, indem diese auf einen Ventilsitz abgesenkt oder von diesem abgehoben werden. Der Einlass ist dabei zwischen den beiden Ventilsitzen und somit auch zwischen den beiden Abgasauslässen angeordnet. Die Anordnung des Ventils erfolgt in einer Bohrung des umgebenden Kanalgehäuses. Das Ventilgehäuse und das Kanalgehäuse weisen jeweils einen durchgehenden einheitlichen Durchmesser auf. Diese beiden Durchmesser werden üblicherweise als durchgängiger Passungssitz ausgelegt, wodurch eine ausreichende Dichtigkeit nach außen und zwischen den Kanälen üblicherweise sichergestellt ist. Allerdings ergeben sich bei einer derartigen Anordnung Probleme beim Einbau und Ausbau des Ventilgehäuses. Insbesondere entstehen bei mehrmaligem Ein- und Ausbau Riefen an den zueinander gerichteten Gehäusewänden, was zu einer wachsenden Leckage führt.

Daher wird in der DE 102 13 693 A1 ein alternatives System zur Abdichtung eines Steckventils in einem umgebenden Gehäuse vorgeschlagen. Bei diesem Ventil ist der Außendurchmesser des Steckventils geringfügig kleiner als der Bohrungsdurchmesser des Kanalgehäuses, wobei das Kanalgehäuse und das Ventilgehäuse einen korrespondierenden Absatz aufweisen, der eine Auflagefläche bildet. Auf dieser Auflagefläche und an der Befestigungsfläche des Steckventils an der Außenwand des Kanalgehäuses werden jeweils Sickendichtungen platziert, die zwischen den beiden Gehäuseteilen eingeklemmt werden und somit zu einer radialen Abdichtung führen. Bei einem Ventil mit mehreren Ausgängen wären jedoch weitere Absätze und Dichtungen erforderlich. Die Dichtungen könnten nicht vormontiert werden, so dass vom Lieferanten des Ventils ein korrekter und dichter Einbau im Gehäuse nicht gewährleistet werden kann.

Des Weiteren ist aus der US 6,814,102 B2 ein Ventil mit zwei Ventilelementen offenbart, die von einem insgesamt vierteiligen Gehäuse umgeben sind. Zwei dieser Teile bilden die Ventilsitze und zwei dienen als Abstandselemente. Diese vier Gehäuseteile werden einzeln in das umgebende Kanalgehäuse eingeschoben. Diese vier Gehäuseteile weisen jeweils einen Passungssitz zum umliegenden Kanalgehäuse auf. Entsprechend entsteht ein hoher Montageaufwand.

Zusätzlich sind aus der WO 01/00982 A1 verschiedene druckausgeglichene Abgasrückführventile bekannt. In einer der offenbarten Ausführungen ist im umgebenden Kanalgehäuse ein separater Ventilsitz ausgebildet. Das Gehäuse des Steckventils ist abgestuft ausgebildet und weist jeweils einen kleineren Außendurchmesser auf als der Innendurchmesser des umgebenden Kanalgehäuses. Eine Abdichtung findet entsprechend n axialer Richtung statt. In alternativen Varianten ist der Ventilsitz am Ventilgehäuse ausgebildet. Eine Abdichtung nach außen und zwischen den Gehäuseteilen findet jeweils über dichtringe statt.

Des Weiteren ist aus der EP 1 072 784 A2 eine Ventilanordnung bekannt, bei der das Ventilgehäuse zylinderförmig ausgebildet ist und in eine abgestufte Bohrung eingesetzt ist, welche ringförmige Ausnehmungen aufweist, wodurch außerhalb der die Ventilsitze umgebenden Bereiche ein Abstand zur Außenwand des Ventilgehäuses geschaffen wird.

Es stellt sich daher die Aufgabe, eine Anordnung eines Ventils in einer Bohrung eines Kanalgehäuses zu schaffen, bei der ohne zusätzliche Abdichtelemente eine ausreichende Dichtwirkung zwischen den Gehäusen sichergestellt wird und dennoch eine mehrmalige Montage und Demontage, ohne dass unzulässig steigende Leckagen auftreten, möglich wird.

Diese Aufgabe wird durch eine Ventilanordnung mit den Merkmalen des Hauptanspruchs gelöst.

Die Erfindung betrifft eine Anordnung eines Ventils in einer Bohrung eines Kanalgehäuses mit einem Ventilgehäuse, in dem ein Eintritt und zumindest ein Austritt ausgebildet sind und welches in die Bohrung des Kanalgehäuses eingesteckt ist, wobei im Ventilgehäuse eine translatorisch bewegbare Ventilstange angeordnet ist, auf welcher zumindest ein mit einem Ventilsitz korrespondierender Ventilschließkörper angeordnet ist. Die Erfindung löst die Aufgabe dadurch, dass die Bohrung stufenförmig ausgebildet ist, wobei der Bohrungsdurchmesser in Einsteckrichtung des Ventilgehäuses sinkt und der Außendurchmesser des Ventilgehäuses derart abgestuft ist, dass ein Passungssitz zum jeweiligen Bohrungsdurchmesser in den den zumindest einen Ventilsitz umgebenden Bereichen ausgebildet ist, während die anderen Bereiche einen Außendurchmesser aufweisen, der kleiner ist als der radial umgebende Bohrungsdurchmesser und kleiner ist als der Außendurchmesser der angrenzenden, den zumindest einen Ventilsitz umgebenden Bereiche, so dass in diesen Bereichen ein Spalt zwischen dem Ventilgehäuse und dem umgebenden Kanalgehäuse besteht, wird eine gute Abdichtung erreicht. Gleichzeitig ist ein solches Ventil mit relativ geringem Kraftaufwand montierbar, da die Gleitflächen der beiden Gehäuse aneinander deutlich reduziert werden. Entsprechend sinkt auch die mechanische Belastung der beiden aneinander entlang gleitenden Flächen, so dass der Abrieb bei mehrmaliger Montage und Demontage deutlich reduziert wird und somit weitestgehend unveränderte Leckageraten erzielt werden.

Vorzugsweise weist das Ventil zwei Ventilschließkörper auf einer Ventilstange auf, über welche zwei von Ventilsitzen umgebene Durchströmungsquerschnitte regelbar sind, welche zu zwei Austritten am Ventilgehäuse führen, wobei der Eintritt zwischen den beiden Austritten angeordnet ist. Bei einem derartigen Ventil besteht ein Kräftegleichgewicht am Ventil durch die zwei entgegengesetzt belasteten Ventilschließkörper in jedem Betriebszustand, deren Betätigung synchron erfolgt. Dies ermöglicht eine genauere Steuerung sowie die Verwendung eines kleineren Antriebes für das Ventil.

In einer vorteilhaften Ausgestaltung weisen beide die Ventilsitze umgebenden Bereiche des Ventilgehäuses einen Außendurchmesser auf, der im Wesentlichen dem zugehörigen Bohrungsdurchmesser des Kanalgehäuses entspricht. Über diese Berührungsflächen wird somit die Abdichtung zwischen den beiden Gehäusen verwirklicht. Gleichzeitig wird die Abdichtung auf die dichtungsrelevanten Bereiche um den Einlass und somit um den Bereich höheren Druckes sinnvoll beschränkt. Es wird sowohl eine Abdichtung zur Umgebung als auch bezüglich der Auslässe sichergestellt.

In einer Weiterbildung der Erfindung weist das Kanalgehäuse drei unterschiedliche Bohrungsdurchmesser auf, wovon zwei mit den beiden die Ventilsitze umgebenden Bereiche korrespondieren, welche axial zu den beiden Seiten des Eintritts angeordnet sind. Bei dieser Ausführung ist ein einfaches Einstecken des Ventils in die Bohrung möglich, da die beiden Passungen in unterschiedlichen Durchmessern verwirklicht sind und somit ein Kontakt der Gehäuse erst im letzten Einschubbereich gegeben ist.

In einer vorteilhaften Ausgestaltung sind die Bohrungsabsätze in Einsteckrichtung des Ventilgehäuses betrachtet jeweils unmittelbar vor den korrespondierenden Passungssitzen ausgebildet. Das verkürzt die axiale Kontaktlänge beim Einstecken des Ventils auf ein Minimum, so dass die Abnutzung der Flächen bei der Montage und Demontage deutlich verringert wird.

Vorzugsweise weist das Ventilgehäuse am in Einsteckrichtung betrachtet vorlaufenden Ende eine Fase oder Rundung auf. Hierdurch wird eine Führung beim Einstecken des Ventils verwirklicht und ein Klemmen durch Verkanten bei der Montage vermieden.

In einer weiterführenden Ausführungsform weist das Ventilgehäuse zwischen den beiden Ventilsitzen einen Bereich auf, in dem der Außendurchmesser des Ventilgehäuses geringer ist als der umgebende Bohrungsdurchmesser so dass in diesem Bereich ein Spalt zwischen dem Ventilgehäuse und dem umgebenden Kanalgehäuse besteht. In diesem Bereich liegt auch eine der Abstufungen der Gehäusebohrung. Dies führt erneut zu verkürzten Gleitflächen und einer Unempfindlichkeit bezüglich axial einzuhaltender Toleranzen.

Des Weiteren weist das Ventilgehäuse vorzugsweise zwischen der Einstecköffnung des Kanalgehäuses und dem näher zur Einstecköffnung angeordneten Ventilsitz einen Bereich auf, in dem der Außendurchmesser des Ventilgehäuses geringer ist als der umgebende Bohrungsdurchmesser, so dass in diesem Bereich ein Spalt zwischen dem Ventilgehäuse und dem umgebenden Kanalgehäuse besteht. In diesem Bereich befindet sich ebenfalls eine Abstufung der Gehäusebohrung. Auch dies führt zu verkürzten Gleitflächen bei der Montage und Demontage des Ventils.

Es wird somit eine Anordnung eines Ventils in einer Bohrung eines Kanalgehäuses geschaffen, mittels derer der Verschleiß bei der Montage und Demontage an den Gleitflächen der Bohrung beziehungsweise des Ventilgehäuses deutlich reduziert wird. Es wird somit eine zuverlässige Abdichtung bei kraftreduzierter Montage und Demontage des Ventils geschaffen. So werden Leckagen auch bei mehrmaligem Ein- und Ausbau zuverlässig vermieden.

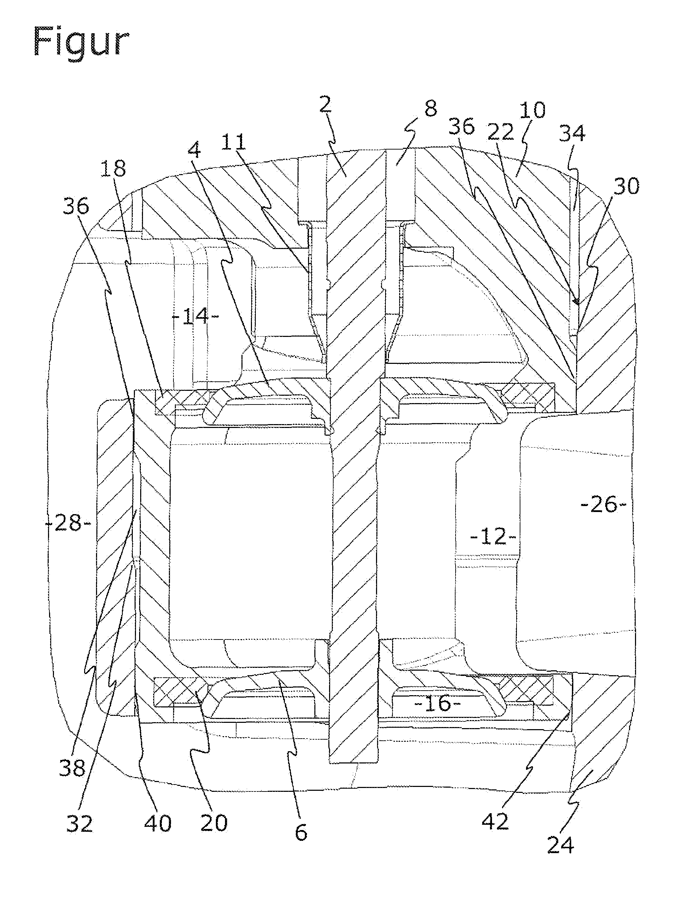

Eine Ausführung einer erfindungsgemäßen Anordnung wird anhand eines in der Figur dargestellten Abgasrückführventils in einer Bohrung eines Kanalgehäuses eines Abgasrückführkanals im Folgenden beschrieben.

Die Figur zeigt eine Seitenansicht eines Ausschnitts eines Ventils in einer Bohrung eines Kanalgehäuses in geschnittener Darstellung.

Das dargestellte Ventil besteht aus einer translatorisch über einen nicht dargestellten Aktuator bewegbaren Ventilstange 2, auf der zwei Ventilschließkörper 4, 6 zumindest axial befestigt sind. Die Ventilstange 2 wird in einer Gleitbuchse 8 axial geführt, welche in einem Ventilgehäuse 10 gelagert ist. Die Ventilstange 2 wird in ihrem sich an die Gleitbuchse anschließenden Bereich von einem Abschirmblech 11 umgeben, welches ein Eindringen von Gas in die Gleitbuchse 10 weitestgehend verhindert.

Das Ventilgehäuse 10 weist einen radialen Eintritt 12 sowie einen radialen Austritt 14 und einen axialen Austritt 16 auf, wobei der Eintritt 12 axial zwischen den beiden Austritten 14, 16 angeordnet ist. Zwischen dem Eintritt 12 und den Austritten 14, 16 befindet sich jeweils ein regelbarer Durchströmungsquerschnitt, der jeweils von einem Ventilsitz 18, 20 umgeben ist, der wiederum jeweils mit einem der Ventilschließkörper 4, 6 derart zusammenwirkt, dass bei Bewegung der Ventilstange 2 und somit der Ventilschließkörper 4, 6 die beiden Durchströmungsquerschnitte durch synchrones Absenken der Ventilschließkörper 4, 6 in Richtung der Ventilsitze 18, 20 verkleinert werden oder durch synchrones Entfernen von den Ventilsitzen 18, 20 vergrößert werden. Hierdurch kann in bekannter Weise die Menge eines zu regelnden Gasstroms geändert werden. Die Ventilsitze 18, 20 sind dabei im Ventilgehäuse 10 befestigt.

Das Ventilgehäuse 10 ist in einer Bohrung 22 eines Kanalgehäuses 24 angeordnet, wobei Leckagen zwischen den beiden Gehäusen 10, 24 vermieden werden müssen. Das Kanalgehäuse 24 weist einen mit dem Einlass 12 des Ventilgehäuses 10 korrespondierenden vorgeschalteten ersten Kanalabschnitt 26 sowie einen mit den Austritten 14, 16 kommunizierenden weiterführenden zweiten Kanalabschnitt 28 auf.

Die Bohrung 22 weist einen ersten Bohrungsabsatz 30 sowie einen zweiten Bohrungsabsatz 32 auf, an denen sich der Bohrungsdurchmesser jeweils stufenförmig in Einsteckrichtung des Ventils von der Einstecköffnung aus verringert. Die Einsteckrichtung entspricht der Bewegungsrichtung der Ventilschließkörper zum Freigeben der Durchströmungsquerschnitte. Somit wird das Ventil in Richtung des axialen Austritts 16 von der nicht dargestellten Einstecköffnung des Kanalgehäuses 24 aus in die Bohrung 22 eingesteckt.

Das Ventilgehäuse weist in axialer Richtung fünf hintereinander angeordnete Bereiche unterschiedlicher Außendurchmesser auf. Im montierten Zustand weist in Einsteckrichtung des Ventils betrachtet ein erster Bereich 34 einen Außendurchmesser auf, welcher kleiner ist als der diesen Bereich 34 radial umgebende Bohrungsdurchmesser, so dass keine Berührung zwischen den Wänden auftritt. Radial außerhalb dieses Bereiches 34 ist auch der erste Bohrungsabsatz 30 angeordnet, der sich in unmittelbarer Nähe eines sich an den ersten Bereich 34 anschließenden zweiten Bereiches 36 befindet, der einen größeren Außendurchmesser aufweist als der erste Bereich 34. Dieser Bereich 36 weist einen Passungssitz zur Bohrung 22 auf und erstreckt sich axial bezüglich des Ventilsitzes 18 zu beiden Seiten.

Ein sich an den zweiten Bereich 36 anschließender dritter Bereich 38 weist wiederum einen kleineren Außendurchmesser auf, welcher auch kleiner ist als der kleinste Bohrungsdurchmesser jenseits des zweiten Bohrungsabsatzes 32 und erstreckt sich auch über diesen hinweg, wobei ein Spalt zwischen den Gehäusen 10, 24 besteht.

Ein sich wiederum an den Bereich 38 axial anschließender Bereich 40 des Ventilgehäuses 10 weist wiederum einen im Wesentlichen gleichen Außendurchmesser wie die umgebende Bohrung 22 auf. Allerdings ist der Durchmesser des Bereiches 40 kleiner als der des zweiten Bereiches 36, da er jenseits des Bohrungsabsatzes 32 angeordnet ist und somit zum kleinsten Bohrungsdurchmesser einen Passungssitz aufweist. Dieser Bereich 40 umgibt wiederum den Ventilsitz 20, so dass der Eintritt 12 an beiden axialen Seiten von den Passungssitzen umgeben ist. Hieran schließt sich ein fünfter Bereich in Form einer Fase 42 an, die sich in Richtung zum Austritt 16 verjüngt.

Die Ausformungen haben zur Folge, dass das Ventilgehäuse 10 zunächst durch die Fase 42 einfach in die Bohrung eingelassen werden kann. Ein erster Widerstand beim Einstecken in axialer Richtung entsteht erst wenn der vierte Bereich 40 über den Absatz 32 der Bohrung 22 geschoben wird. Dieser Bereich 40 gleitet dann an der umliegenden Bohrungswand entlang. Ein zweiter Passungssitz wird erst erreicht, wenn auch der zweite Bereich 36 über den Bohrungsabsatz 30 geschoben wird. Jedoch werden die Fügelängen beziehungsweise Gleitflächenlängen durch diese Ausführung deutlich verkürzt. Die Abdichtung erfolgt durch die Passung zwischen dem Bohrungsdurchmesser und dem zweiten Bereich 36 beziehungsweise dem vierten Bereich 40 des Ventilgehäuses 10. Dabei verhindert der vierte Bereich 40 eine Leckage vom Eintritt 26 zum Austritt 16 während der zweite Bereich 36 einen Leckagestrom vom Eintritt 26 zum Austritt 14 verhindert. Eine Abdichtung vom radialen Austritt 14 zur Umgebung ist je nach Druckverhältnissen nicht erforderlich oder kann über die Befestigung des Steckventils am Gehäuse erfolgen. Selbstverständlich wäre auch die Ausbildung einer weiteren Abstufung der Gehäuse im Sinne der Anmeldung denkbar.

Es wird somit eine Anordnung eines Ventils in einer Bohrung eines Gehäuses geschaffen, bei dem eine zuverlässige Abdichtung auch bei mehrmaliger Montage und Demontage gesichert ist, da eine Abnutzung der gegeneinander abdichtenden Fügeflächen weitestgehend vermieden wird, indem die Fügeflächen deutlich gekürzt werden. Dennoch wird eine zuverlässige Abdichtung gewährleistet, ohne zusätzliche Dichtungen verwenden zu müssen.

Es sollte deutlich sein, dass verschiedene konstruktive Änderungen innerhalb des Schutzbereiches der Anmeldung im Vergleich zum beschriebenen Ausführungsbeispiel denkbar sind. Insbesondere sind die Abstufungen und Durchmesser dem jeweilig zu verbauenden Ventil anzupassen. Auch sind die Längen Fügeflächen den Druckverhältnissen anzupassen.

## Patentansprüche

1. Anordnung eines Ventils in einer Bohrung eines Kanalgehäuses mit einem einstückigen Ventilgehäuse (10), in dem ein Eintritt (12) und zumindest ein Austritt (14; 16) ausgebildet sind und welches in die Bohrung (22) des Kanalgehäuses (24) eingesteckt ist,
wobei im Ventilgehäuse (10) eine translatorisch bewegbare Ventilstange (2) angeordnet ist, auf welcher zumindest ein mit einem Ventilsitz (18; 20) korrespondierender Ventilschließkörper (4; 6) angeordnet ist,
**dadurch gekennzeichnet, dass**
die Bohrung (22) stufenförmig ausgebildet ist, wobei der Bohrungsdurchmesser in Einsteckrichtung des Ventilgehäuses (10) sinkt und der Außendurchmesser des Ventilgehäuses (10) derart abgestuft ist, dass ein Passungssitz zum jeweiligen Bohrungsdurchmesser in den den zumindest einen Ventilsitz (18; 20) umgebenden Bereichen (36, 40) ausgebildet ist, während die anderen Bereiche (34, 38, 42) einen Außendurchmesser aufweisen, der kleiner ist als der radial umgebende Bohrungsdurchmesser und kleiner ist als der Außendurchmesser der angrenzenden, den zumindest einen Ventilsitz (18; 20) umgebenden Bereiche (36, 40), so dass in diesen Bereichen (34, 38, 42) ein Spalt zwischen dem Ventilgehäuse (10) und dem umgebenden Kanalgehäuse (24) besteht.

2. Anordnung eines Ventils in einer Bohrung eines Kanalgehäuses nach Anspruch 1,
**dadurch gekennzeichnet, dass**
das Ventil zwei Ventilschließkörper (4, 6) auf der einen Ventilstange (2) aufweist, über welche zwei von Ventilsitzen (18, 20) umgebene Durchströmungsquerschnitte regelbar sind, welche zu zwei Austritten (14, 16) am Ventilgehäuse (10) führen, wobei der Eintritt (12) zwischen den beiden Austritten (14, 16) angeordnet ist.

3. Anordnung eines Ventils in einer Bohrung eines Kanalgehäuses nach Anspruch 2,
**dadurch gekennzeichnet, dass**
beide die Ventilsitze (18, 20) umgebenden Bereiche (36, 40) des Ventilgehäuses (10) einen Außendurchmesser aufweisen, der im Wesentlichen dem zugehörigen Bohrungsdurchmesser des Kanalgehäuses (24) entspricht.

4. Anordnung eines Ventils in einer Bohrung eines Kanalgehäuses nach einem der vorhergehenden Ansprüche,
**dadurch gekennzeichnet, dass**
das Kanalgehäuse (24) drei unterschiedliche Bohrungsdurchmesser aufweist, wovon zwei mit den beiden die Ventilsitze (18, 20) umgebenden Bereichen (36, 40) korrespondieren, welche axial zu den beiden Seiten des Eintritts (12) angeordnet sind.

5. Anordnung eines Ventils in einer Bohrung eines Kanalgehäuses nach Anspruch 4,
**dadurch gekennzeichnet, dass**
die Bohrungsabsätze (30, 32) in Einsteckrichtung des Ventilgehäuses (10) betrachtet jeweils unmittelbar vor den korrespondierenden Passungssitzen ausgebildet sind.

6. Anordnung eines Ventils in einer Bohrung eines Kanalgehäuses nach einem der vorhergehenden Ansprüche,
**dadurch gekennzeichnet, dass**
das Ventilgehäuse (10) am in Einsteckrichtung betrachtet vorlaufenden Ende eine Fase (40) oder Rundung aufweist.

7. Anordnung eines Ventils In einer Bohrung eines Kanalgehäuses nach einem der vorhergehenden Ansprüche,
**dadurch gekennzeichnet, dass**
das Ventilgehäuse (10) zwischen den beiden Ventilsitzen (18, 20) einen Bereich (38) aufweist, in dem der Außendurchmesser des Ventilgehäuses (10) geringer ist als der umgebende Bohrungsdurchmesser, so dass in diesem Bereichen (38) ein Spalt zwischen dem Ventilgehäuse (10) und dem umgebenden Kanalgehäuse (24) besteht.

8. Anordnung eines Ventils in einer Bohrung eines Kanalgehäuses nach einem der vorhergehenden Ansprüche,
**dadurch gekennzeichnet, dass**
das Ventilgehäuse (10) zwischen einer Einstecköffnung des Kanalgehäuses (24) und dem näher zur Einstecköffnung angeordneten Ventilsitz (18) einen Bereich (34) aufweist, in dem der Außendurchmesser des Ventilgehäuses (10) geringer ist als der umgebende Bohrungsdurchmesser, so dass in diesem Bereich (34) ein Spalt zwischen dem Ventilgehäuse (10) und dem umgebenden Kanalgehäuse (24) besteht.

## Claims

1. An arrangement of a valve in a bore of a duct housing, the arrangement comprising:
an integral valve housing (10) comprising an inlet (12) and at least one outlet /14; 16), the valve housing being plugged into the bore (22) of the duct housing (24),
a translational valve rod (2) arranged in the valve housing (10), at least one valve-closure member (4; 6) being arranged on the valve rod, the at least one valve-closure member corresponding with at least one valve seat (18; 20),
**characterized in that**
the bore (22) is stepped, the bore diameter of the bore decreasing when viewed from a plug-in direction of the valve housing (10), and wherein the outer diameter of the valve housing (10) being stepped such that it forms an fitting seat with the bore diameter in regions (36, 40) radially surrounding the at least one valve seat (18; 20), while the other regions (34, 38, 42) have an outer diameter which is smaller than the respective radially surrounding bore diameter and smaller than the outer diameter of the adjacent regions (36, 40) surrounding the at least one valve seat (18; 20), so that, in these regions (34, 38, 42), a gap exists between the valve housing (10) and the surrounding duct housing (24).

2. The arrangement of a valve in a bore of a duct housing as recited in claim 1, **characterized in that** the valve has two valve-closure members (4, 6) on the one valve rod (2), by which two flow cross sections surrounded by valve seats (18, 20), the flow cross sections leading to two outlets (14, 16) at the valve housing (10), the inlet (12) being arranged between the two outlets (14, 16).

3. The arrangement of a valve in a bore of a duct housing as recited in claim 2, **characterized in that** both regions (36, 40) of the valve housing (10) surrounding the valve seats (18, 20) have an outer diameter that substantially corresponds to the corresponding bore diameter of the duct housing (24).

4. The arrangement of a valve in a bore of a duct housing as recited in one of the preceding claims, **characterized in that** the duct housing (24) comprises three different bore diameters, wherein two of the three different bore diameters correspond with the regions (36, 40) surrounding the two valve seats (18, 20) and are arranged axially on either side of the inlet (12).

5. The arrangement of a valve in a bore of a duct housing as recited in claim 4, **characterized in that** the bore shoulders (30, 32) are formed directly in front of the interference fit when viewed from the plug-in direction of the valve housing (10).

6. The arrangement of a valve in a bore of a duct housing as recited in one of the preceding claims, **characterized in that** the valve housing (10) comprises a leading end which is chamfered (40) or curved when viewed from the plug-in direction.

7. The arrangement of a valve in a bore of a duct housing as recited in one of the preceding claims, **characterized in that** the valve housing (10) has a region (38) between the two valve seats (18, 20), in which the outer diameter of the valve housing (10) is smaller than the surrounding bore diameter, so that in this region (38) a gap exists between the valve housing (10) and the surrounding duct housing (24).

8. The arrangement of a valve in a bore of a duct housing as recited in one of the preceding claims, **characterized in that** the valve housing (10) has a region (34) arranged between a plug-in opening of the duct housing (24) and the valve seat (18) arranged closer to the plug-in opening, wherein, in this region, the outer diameter of the valve housing (10) is smaller than the surrounding bore diameter, so that in this region (34) a gap exists between the valve housing (10) and the surrounding duct housing (24).

## Revendications

1. Disposition d'une soupape dans un alésage d'un logement de conduit avec un corps de soupape (10) en une pièce, dans lequel sont formées une entrée (12) et au moins une sortie (14; 16) et qui est enfiché dans l'alésage (22) du logement de conduit (24),
une tige de soupape (2), apte à être déplacée en translation, étant disposée dans le corps de soupape (10), au moins un élément de fermeture de soupape (4;6) étant disposé sur la tige, l'élément correspondant avec un siège de soupape (18; 20),
**caractérisée en ce que**
l'alésage présente une configuration en gradins, le diamètre dudit alésage décroissant dans la direction d'enfichage du corps de soupape (10), et le diamètre extérieur du corps de soupape (10) est étagé de sorte qu'un ajustement serré avec le diamètre d'alésage respectif est formé dans les régions (36, 40) entourant ladite au moins un siège de soupape (18; 20), tandis que les autres régions (34, 38, 42) présentent un diamètre extérieur inférieur au diamètre de l'alésage les entourant radialement et inférieur au diamètre extérieur des régions (36, 40) voisins qui entourent ledit au moins un siège de soupape (18; 20), de sorte qu'une fente existe entre le corps de soupape (10) et le logement de conduit (24) l'entourant.

2. Disposition d'une soupape dans un alésage d'un logement de conduit selon la revendication 1, **caractérisée en ce que** la soupape a deux éléments de fermeture de soupape (4, 6) sur ladite une tige de soupape (2), par lesquels il est possible de commander deux sections transversales d'écoulement entourées par lesdits sièges de soupape (18, 20), lesdites sections menant à deux sorties (14, 16) (14, 16) dans le corps de soupape (10), l'entrée (12) étant disposée entre les deux sorties (14, 16).

3. Disposition d'une soupape dans un alésage d'un logement de conduit selon la revendication 2, **caractérisée en ce que** chaque région (36, 40) du corps de soupape (10), entourant les sièges de soupape (18, 20), présente un diamètre extérieur sensiblement correspondant au diamètre d'alésage associé du logement de conduit (24).

4. Disposition d'une soupape dans un alésage d'un logement de conduit selon l'une quelconque des revendications précédentes, **caractérisée en ce que** le logement de conduit (24) présente trois diamètres d'alésage différents, dont deux correspondent avec les deux régions (36, 40) entourant le sièges de soupape (18, 20), les régions étant disposés axialement par rapport aux deux côtés de ladite entrée (12).

5. Disposition d'une soupape dans un alésage d'un logement de conduit selon la revendication 4, **caractérisée en ce que** les gradins (30, 32) dudit alésage sont chacun formé juste avant les ajustages serrés correspondants, vu dans la direction d'emboitement dudit corps de soupape (10).

6. Disposition d'une soupape dans un alésage d'un logement de conduit selon l'une quelconque des revendications précédentes, **caractérisée en ce que** le corps de soupape (10) présent un chanfrein (40) ou arrondi à l'extrémité avant, vu dans la direction d'enfichage.

7. Disposition d'une soupape dans un alésage d'un logement de conduit selon l'une quelconque des revendications précédentes, **caractérisée en ce que** le corps de soupape (10) a une région (38) entre les deux sièges de soupape (18, 20), dans laquelle le diamètre extérieur du corps de soupape (10) est inférieur au diamètre d'alésage environnant, de sorte que dans cette région (38) une fente existe entre le corps de soupape (10) et le logement de conduit (24) environnant.

8. Disposition d'une soupape dans un alésage d'un logement de conduit selon l'une quelconque des revendications précédentes, **caractérisée en ce que** le corps de soupape (10) comprend une région (34) entre une ouverture d'enfichage dans le logement du conduit (24) et le siège de soupape (18) plus proche à l'ouverture d'enfichage, dans laquelle région le diamètre extérieur du corps de soupape (10) est inférieur au diamètre d'alésage environnant, de sorte que dans cette région (34) une fente existe entre le corps de soupape (10) et le logement de conduit (24) environnant.
